# FASCICULE DE BREVET EUROPEEN

(11) **EP 1 914 119 B1**
(45) Date de publication et mention de la délivrance du brevet: **26.12.2012**
(21) Numéro de dépôt: 07291245.4
(22) Date de dépôt: 11.10.2007
(51) Int. Cl.: B60R 7/08

(54) **Dispositif de rangement intérieur pour véhicule automobile**
Vorrichtung zur Aufbewahrung im Innenraum für Kraftfahrzeuge
Interior storage device for an automobile

(30) Priorité: 16.10.2006 FR 0609051
(43) Date de publication de la demande: 23.04.2008
(73) Titulaire: Faurecia Interieur Industrie, 92000 Nanterre (FR)
(72) Inventeur: Bergerioux, Jacques, 95810 Arronville (FR)
(74) Mandataire: Domenego, Bertrand

(56) Documents cités:
- WO-A-2004/089694
- GB-A- 2 309 670
- JP-A- 8 091 133
- JP-A- 2003 205 737
- JP-A- 2003 220 891

## Description

L'invention concerne en général un dispositif de rangement intérieur pour véhicule automobile.

Les constructeurs automobiles cherchent constamment à améliorer l'ergonomie de l'habitacle des véhicules automobiles. Ainsi, les véhicules les plus récents comportent différents types de rangement, adaptés aux besoins du conducteur et des passagers, par exemple des porte-gobelets, des porte-canettes, des rangements pour disques compacts, pour téléphones portables, pour pièces de monnaie, ou des vide-poches de toutes tailles.

Ces différents types de rangement sont toutefois mal adaptés aux cartes bancaires. Les cartes bancaires sont fréquemment utilisées par le conducteur pour payer les péages d'autoroutes. Après avoir introduit sa carte dans l'automate de paiement, le conducteur récupère cette carte et le ticket fourni par la machine. S'il est seul à bord du véhicule, il les pose dans un vide-poches et redémarre immédiatement le véhicule, de façon à ne pas retarder les automobilistes attendant derrière lui. Il ne prend donc pas le temps de ranger la carte et le ticket à l'intérieur de son portefeuille, la carte et le ticket restant dans le vide-poches jusqu'à ce que le conducteur arrête une nouvelle fois son véhicule. Pendant le trajet, la carte peut être éjectée du vide-poches, notamment en cas de changement de direction brusque du véhicule, et glisser jusqu'à un endroit où le conducteur aura du mal à la retrouver.

JP 2003 - 205737 décrit un pare-soleil ayant un logement de réception d'une carte type carte de paiement, formant un dispositif de rangement conforme au préambule de la revendication 1.

Dans ce contexte, l'invention vise à proposer un dispositif de rangement qui rende le véhicule automobile ergonomique et commode d'utilisation.

A cette fin, l'invention porte sur un dispositif de rangement intérieur pour véhicule automobile, selon la revendication 1.

Le dispositif de rangement peut également présenter une ou plusieurs des caractéristiques ci-dessous, considérées individuellement ou selon toutes les combinaisons techniquement possibles :
- le dispositif comprend, pour chaque logement, des parois latérales reliant la paroi frontale à la paroi arrière, et des moyens pour fixer la paroi de blocage dudit logement aux parois latérales en position d'usage de la paroi de blocage ;
- l'organe élastique de la ou chaque paroi de blocage est une languette en saillie vers l'intérieur du logement correspondant quand ladite paroi de blocage occupe sa position d'usage ;
- la ou chaque paroi de support comprend au moins deux nervures de support de la carte se dressant vers l'intérieur du logement correspondant ; et
- le dispositif comprend deux logements de réception de part et d'autre d'une paroi de support unique, et deux parois de blocage mobiles chacune entre une position d'usage dans laquelle ladite paroi de blocage délimite un logement correspondant à l'opposé de la paroi de support, et une position de moulage dans laquelle ledit logement correspondant est ouvert à l'opposé de la paroi de support de manière à permettre le démoulage du module.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en perspective de la planche de bord d'un véhicule automobile équipé d'un dispositif de rangement selon l'invention ;
- la figure 2 est une vue en coupe longitudinale du dispositif de rangement de la figure 1, les parois de blocage des deux logements de ce dispositif étant représentées en position de moulage ;
- la figure 3 est une vue en coupe transversale du dispositif de la figure 2, considérée selon l'incidence des flèches III-III ;
- la figure 4 est une vue en coupe transversale similaire à celle de la figure 2, les parois de blocage étant représentées en position d'usage ; et
- la figure 5 est une vue en coupe dans un plan horizontal, considéré suivant l'incidence des flèches V-V de la figure 3.

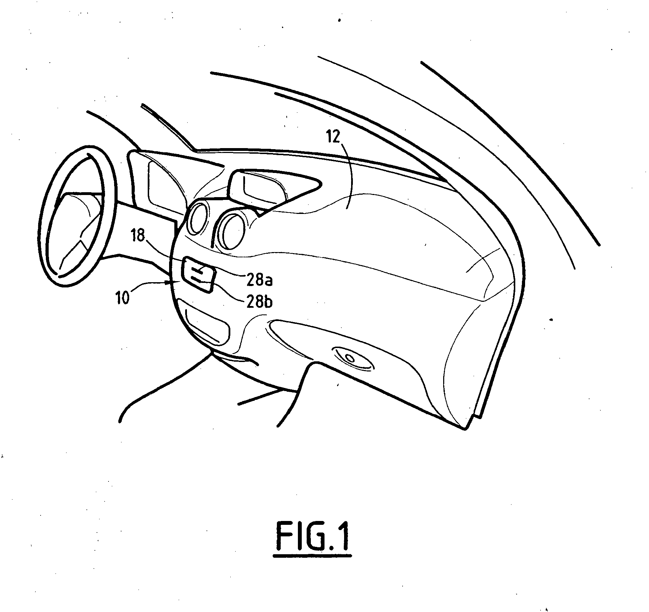

Le dispositif de rangement 10 est prévu pour recevoir et pour maintenir en position deux cartes d'un format correspondant sensiblement à celui d'une carte de paiement. Les cartes de paiement les plus courantes (carte bleue, carte VISA^{®}, carte American Express^{®}, Mastercard^{®}" etc...) sont d'un format standard : 8,5 cm x 5,4 cm environ. Comme le montre la figure 1, le dispositif de rangement 10 est typiquement intégré à la planche de bord 12, et est disposé à portée du conducteur du véhicule, par exemple au-dessus de la console centrale du véhicule.

Le dispositif de rangement 10 est un module venu de moulage, réalisé en une seule opération de moulage.

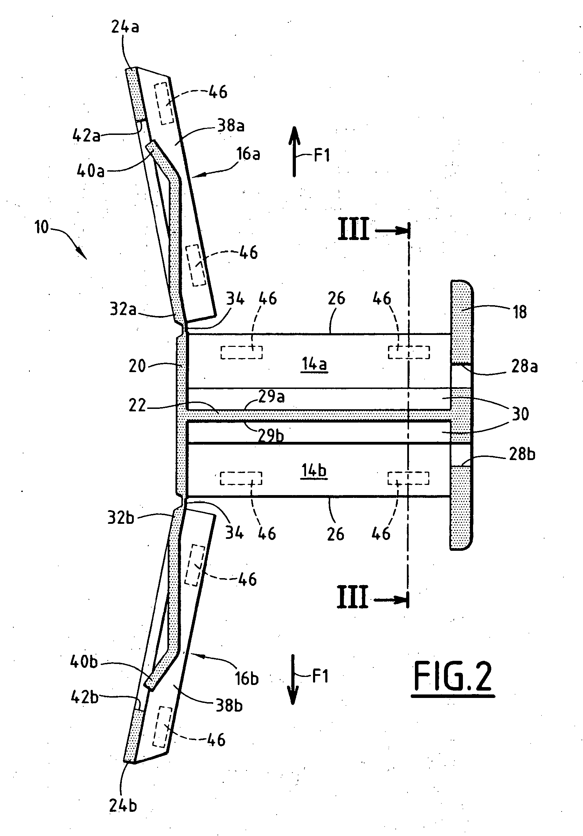

Comme le montre la figure 2, le dispositif 10 comporte deux logements 14a et 14b susceptibles de recevoir chacun une carte, et des moyens 16a et 16b pour bloquer de manière amovible la carte à l'intérieur de chacun des logements 14a, 14b.

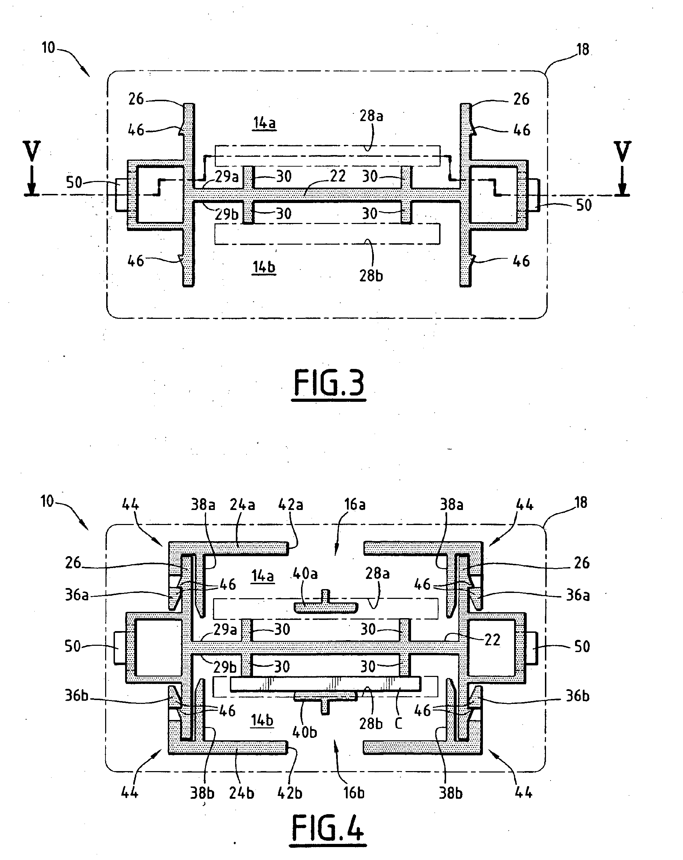

Plus précisément, le dispositif 10 comporte une paroi frontale 18 délimitant les logements 14a/14b vers l'habitacle du véhicule, une paroi arrière 20 parallèle à la paroi frontale 18 et délimitant les logements 14a/14b à l'opposé de la paroi 18, une paroi de support 22 séparant les logements 14a/14b l'un de l'autre, deux parois mobiles 24a et 24b susceptibles d'obturer les logements 14a et 14b à l'opposé de la paroi de support 22, et deux parois latérales opposées 26 (figure 3).

Deux fentes 28a, 28b, parallèles l'une à l'autre, sont ménagées dans la paroi frontale 18 et débouchent respectivement dans les logements 14a et 14b. Les fentes 28a/28b sont de même section, et présentent une section de passage légèrement plus grande que la petite tranche d'une carte de paiement.

La paroi de support 22 relie la paroi frontale 18 à la paroi arrière 20, et relie également les deux parois latérales 26 l'une à l'autre. La paroi de support 22 s'étend parallèlement aux fentes 28a et 28b, et se raccorde à la paroi frontale 18, sensiblement à mi-distance des deux fentes 28a et 28b.

La paroi de support 22 porte sur ses grandes faces 29a et 29b tournées respectivement vers les logements 14a et 14b deux nervures longitudinales 30, parallèles l'une à l'autre, s'étendant depuis la paroi frontale 18 jusqu'à la paroi arrière 20. La hauteur de chacune des nervures 30 est choisie de telle manière que la tranche de ladite nervure 30 s'étende au ras de la fente 28a ou 28b.

Les parois latérales 26 sont chacune perpendiculaire à la fois à la paroi arrière 20, à la paroi frontale 18 et à la paroi de support 22.

Les parois de blocage 24a et 24b sont similaires et vont être décrites conjointement.

Chacune des parois de blocage 24a et 24b est mobile par rapport à la paroi de support 22 entre une position d'usage dans laquelle ladite paroi de blocage 24a/24b délimite le logement 14a/14b à l'opposé de la paroi de support 22, et une position de moulage, représentée sur la figure 2, dans laquelle le logement correspondant 14a/14b est ouvert à l'opposé de la paroi de support 22 de manière à permettre le démoulage du dispositif de rangement.

A cette fin, chaque paroi de blocage 24a/24b présente un bord transversal 32a/32b lié à la paroi arrière 20 par une charnière film 24.

Par ailleurs, chacune des parois de blocage 24a/24b porte le long de ses deux bords latéraux opposés des nervures 36a/36b de fixation aux parois latérales 26 (figure 4). Ces nervures 36a/36b sont en saillie vers la paroi de support 22 en position d'usage des parois de blocage 24a/24b.

Comme le montre la figure 4, les parois de blocage 24a/24b portent également deux nervures de guidage 38a/38b longitudinales, et s'étendant parallèlement à chacune des nervures de fixation 36a/36b, légèrement écartées de ces nervures 36a/36b.

Par ailleurs, chaque paroi de blocage 24a/24b est munie d'un organe élastique 40a/40b apte à solliciter une carte C vers la paroi de support 22, quand la paroi 24a/24b est en position d'usage et que la carte se trouve à l'intérieur du logement 14a/14b. Les organes élastiques 40a/40b constituent les moyens 16a/16b pour bloquer de manière amovible la carte C à l'intérieur du logement 14a/14b.

Cet organe élastique est par exemple une languette 40a/40b disposée au centre d'une lumière 42a/42b ménagée dans la paroi 24a/24b. La languette 40a/40b est liée par un bord à une zone de la paroi 24a/24b située à proximité de la charnière 34. Elle est libre le long de ses trois autres bords. La languette 40a/40b présente une forme allongée. Elle s'étend, à partir de son bord lié à la paroi 24a/24b, sensiblement parallèlement aux nervures 36a/36b. La languette 40a/40b est en saillie vers l'intérieur du logement 14a/14b correspondant quand la paroi de blocage 24a/24b occupe sa position d'usage (voir figure 4).

En position de moulage (figure 2) chaque paroi 24a/24b s'étend dans un plan légèrement incliné par rapport à la paroi arrière 20. La paroi 24a/24b s'étend, à partir de la charnière film 34, à l'opposé de la paroi de support 22, et en s'écartant légèrement de la paroi frontale 18. Dans cette position, comme le montre par exemple la figure 2, le tronçon de la patte 40a/40b qui se raccorde à la paroi 24a/24b est placé sensiblement dans le plan de la paroi 20.

En position d'usage (figure 4), chaque paroi 24a/24b est sensiblement parallèle à la paroi de support 22. Dans cette position, les nervures de fixation 36a/36b sont disposées contre les parois latérales 26, à l'extérieur du logement 14a/14b. En revanche, les nervures de guidage 38a/38b sont disposées le long des parois latérales 26, légèrement écartées de celles-ci, à l'intérieur du logement 14a/14b.

Par ailleurs, le dispositif comprend des moyens 44 pour fixer chaque paroi de blocage 24a/24b aux parois latérales 26, en position d'usage de la paroi de blocage 24a/24b. Ces moyens sont par exemple des moyens de fixation par encliquetage, comprenant des ergots complémentaires 46 ménagés sur les nervures de fixation 36a/36a et sur les parois latérales 26, et venant en prise les uns avec les autres en position d'usage de la paroi 24a/24b.

Le dispositif 10 comporte par ailleurs des pattes élastiques 50 destinées au montage du dispositif 10 sur la planche de bord, disposées de part et d'autre des parois latérales 26, à l'extérieur des logements 14a et 14b.

Le moulage, le montage et l'utilisation du dispositif de rangement décrit ci-dessus vont maintenant être détaillés.

Le dispositif 10, comme indiqué ci-dessus, est moulé avec les parois de blocage 24a/24b en position de moulage, c'est-à-dire dans la position représentée sur la figure 2. Les deux parties du moule, définissant entre elles la cavité d'injection, sont approchées l'une de l'autre, puis écartées l'une de l'autre, suivant la direction des flèches F1 de la figure 2, c'est-à-dire parallèlement à la paroi arrière 20 et à la paroi frontale 18. Dans cette position, les logements 14a et 14b sont complètement dégagés à l'opposé de la paroi de support 22 suivant la direction des flèches F1.

Une fois le dispositif de rangement 10 extrait du moule, les parois de blocage 24a/24b sont rabattues en position d'usage. Elles pivotent à cet effet autour des charnières film 34 dans le sens horaire sur la figure 2 pour la paroi 24a et dans le sens anti-horaire sur la figure 2 pour la paroi 24b. Quand les parois de blocage 24a/24b atteignent leurs positions d'usage respectives, les ergots 46 portés par les nervures 36a/36b et par les parois latérales 26 s'encliquètent mutuellement, assurant ainsi une fixation des parois 24a/24b dans leurs positions d'usage respectives.

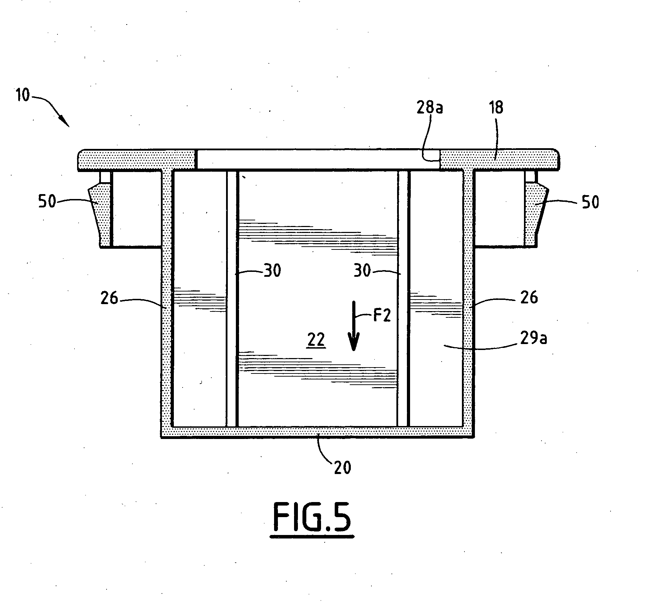

Le dispositif de rangement 10 est ensuite inséré dans un logement de réception prévu dans la planche de bord 12, à travers un orifice non représenté. La paroi arrière 20 est insérée la première à travers l'orifice. L'orifice présente par exemple une forme rectangulaire, de section légèrement plus petite que celle de la paroi frontale 18. Le dispositif est enfoncé suivant la direction définie par la flèche F2 de la figure 5, c'est-à-dire sensiblement perpendiculairement à la paroi frontale 18. Au cours de ce mouvement, les pattes de montage 50 viennent au contact des bords de l'orifice et s'escamotent élastiquement pour laisser passer le dispositif de rangement 10. Quand les pattes de blocage 50 ont dépassé les bords de l'orifice, elles reviennent en position, de telle sorte que les bords de l'orifice sont pincés entre les pattes 50 et la paroi frontale 18. La périphérie de la paroi frontale 18 est, dans cette situation, plaquée contre la planche de bord 12 autour de l'orifice.

On se trouve alors dans la situation illustrée sur la figure 1, seule la paroi frontale 18 du dispositif 10 restant apparente à l'extérieur de la planche de bord 12.

Quand le conducteur ou un passager du véhicule veut utiliser le dispositif de rangement 10, il insère une carte C, petit côté vers l'avant, à travers l'une des fentes 28a, 28b, à la manière dont on insère une carte bancaire dans la fente prévue à cet effet dans un distributeur de billets. La carte C passe à travers la fente, par exemple la fente 28b, et glisse sur les nervures 30 situées immédiatement au ras de la fente 28b. Quand la carte C a pénétré suffisamment profondément dans le logement 14b à partir de la fente 28b, elle passe au droit de la patte élastique 40b, qui plaque la carte C contre les nervures 30, vers la paroi de support 22, comme illustré sur la figure 4.

Le conducteur ou le passager peut continuer à enfoncer la carte dans le logement 14B, jusqu'à ce que celle-ci vienne en butée contre la paroi arrière 20. L'écartement entre la paroi arrière 20 et la paroi frontale 18 est choisie de telle sorte que la carte reste partiellement en saillie à l'extérieur du logement 14b quand elle est en butée contre la paroi arrière 20, par exemple sur 1/5^{ème} de son plus grand côté.

Le dispositif de rangement décrit ci-dessus présente de multiples avantages.

L'ergonomie et la commodité d'utilisation du véhicule à bord duquel est implanté le dispositif sont grandement améliorées du fait que le dispositif comprend au moins un logement de réception pour une carte de format correspondant sensiblement à une carte de paiement et des moyens pour bloquer de manière amovible la carte à l'intérieur du logement. En effet, après avoir utilisé sa carte de paiement, par exemple pour payer un péage d'autoroute, le conducteur peut très facilement insérer sa carte de paiement dans un des logements de réception. La carte y est bloquée temporairement, jusqu'à ce que le conducteur souhaite l'utiliser une nouvelle fois, ou jusqu'à ce que le conducteur la range dans son portefeuille.

Le dispositif de rangement peut commodément être disposé dans un espace vacant de la planche de bord, comme par exemple, dans les véhicules d'entrée de gamme, dans un espace non utilisé prévu pour recevoir les commandes d'équipements optionnels qui n'existent pas à bord du véhicule. Dans les véhicules d'entrée de gamme, ces commandes sont généralement remplacées par des caches en matière plastique. L'invention permet de tirer profit de cet espace inutilisé en vue d'offrir un nouveau service à bord du véhicule.

Les fentes d'accès au logement de réception sont discrètes. Par ailleurs, elles permettent d'assurer un guidage de la carte lors de son introduction, et contribuent au maintien en place des cartes disposées dans les logements.

Du fait que le dispositif de rangement est venu de moulage et est réalisé en une seule opération (moulage "one shot"), ce dispositif est particulièrement économique.

De plus, le dispositif est un module formé d'une seule pièce, son assemblage et son montage dans la planche de bord du véhicule étant particulièrement simples et ne nécessitant aucun outil spécifique.

Le dispositif offre l'avantage de pouvoir recevoir deux cartes, par exemple une carte de paiement et une carte d'abonnement au péage.

Les nervures de support 30 et les nervures de guidage 38a/38b assurent un guidage de la carte lors de son introduction dans le logement. Les nervures contribuent également au maintien en position de la carte à l'intérieur du logement. La carte occupe ainsi une position bien définie dans le logement et son débattement à l'intérieur du logement est limité.

Le dispositif de rangement décrit ci-dessus peut présenter de multiples variantes.

Il peut ne comporter qu'un unique logement de réception.

Dans l'exemple de réalisation de la figure 1, les cartes sont disposées à l'horizontale à l'intérieur des logements 14a et 14b. En variante, les cartes peuvent être disposées verticalement, ou en oblique selon toutes les orientations possibles entre la verticale et l'horizontale.

Les fentes 28a et 28b peuvent être prévues plus hautes, de manière à pouvoir disposer à l'intérieur de chaque logement plusieurs cartes empilées les unes sur les autres.

De même, les fentes 28a et 28b peuvent être prévues plus longues, de manière à pouvoir introduire les cartes dans le logement par leurs grands côtés, et non pas par leurs petits côtés.

Les moyens élastiques 16a, 16b prévus pour plaquer les cartes vers la paroi de support 22 peuvent être de tout type, et ne sont pas nécessairement des languettes élastiques en saillie par rapport aux parois de blocage.

De même, les moyens de fixation des parois de blocage sur les parois latérales ne sont pas nécessairement des moyens d'encliquetage, mais peuvent être de tout type.

La paroi de support 22 n'est pas nécessairement commune aux deux logements 14a et 14b, le dispositif pouvant comprendre par exemple deux parois parallèles, espacées l'une de l'autre, l'une délimitant le logement 14a et l'autre le logement 14b.

Le dispositif de rangement peut être prévu pour recevoir des cartes d'un format ne correspondant pas exactement au format des cartes de paiement, par exemple légèrement plus grandes ou légèrement plus petites qu'une carte de paiement standard.

Le dispositif de rangement peut ne pas être monté dans la planche de bord, mais être disposé à un autre endroit de l'habitacle du véhicule, par exemple dans la console centrale séparant les deux sièges avant, ou dans le garnissage d'un ouvrant latéral avant.

## Revendications

1. Dispositif de rangement intérieur pour véhicule automobile, le dispositif (10) comprenant au moins un logement (14a, 14b) de réception d'au moins une carte (C) de format correspondant sensiblement à une carte de paiement, et des moyens (16a, 16b) pour bloquer de manière amovible la ou chaque carte (C) à l'intérieur du ou de chaque logement (14a, 14b), le dispositif (10) étant venu de moulage d'une seule pièce, le dispositif comprenant une paroi frontale (18) délimitant le ou chaque logement (14a, 14b), et pour chaque logement (14a, 14b), une fente (28a, 28b) d'introduction de la carte (C) ménagée dans la paroi frontale (18) et débouchant à l'intérieur dudit logement (14a, 14b), **caractérisé en ce que** le dispositif comprend, pour chaque logement (14a, 14b), une paroi (22) de support de la carte (C) délimitant ledit logement (14a, 14b), et une paroi (24a, 24b) de blocage de la carte (C) munie d'au moins un organe élastique (40a, 40b) apte à solliciter la carte (C) vers la paroi de support (22), la paroi de support (22) et la paroi de blocage (24a, 24b) étant distinctes de la paroi frontale (18), la paroi de blocage (24a, 24b) étant mobile par rapport à la paroi de support (22) entre une position d'usage dans laquelle ladite paroi de blocage (24a, 24b) délimite le logement (14a, 14b) à l'opposé de la paroi de support (22), et une position de moulage dans laquelle le logement (14a, 14b) est ouvert à l'opposé de la paroi de support (22) de manière à permettre le démoulage du module, le dispositif comprenant en outre, pour chaque logement (14a, 14b), une paroi arrière (20) délimitant ledit logement (14a, 14b) à l'opposé de la paroi frontale (18), la paroi de blocage (24a, 24b) dudit logement (14a, 14b) étant liée à la paroi arrière (20) par une charnière film (34).

2. Dispositif selon la revendication 1, **caractérisé en ce qu'**il comprend, pour chaque logement (14a, 14b), des parois latérales (26) reliant la paroi frontale (18) à la paroi arrière (20), et des moyens (44) pour fixer la paroi de blocage (24a, 24b) dudit logement (14a, 14b) aux parois latérales (26) en position d'usage de la paroi de blocage (24a, 24b).

3. Dispositif selon la revendication 1 ou 2, **caractérisé en ce que** l'organe élastique de la ou chaque paroi de blocage (24a, 24b) est une languette (40a, 40b) en saillie vers l'intérieur du logement (14a, 14b) correspondant quand ladite paroi de blocage (24a, 24b) occupe sa position d'usage.

4. Dispositif selon l'une quelconque des revendications 1 à 3, **caractérisé en ce que** la ou chaque paroi de support (22) comprend au moins deux nervures (30) de support de la carte (C) se dressant vers l'intérieur du logement (14a, 14b) correspondant.

5. Dispositif selon l'une quelconque des revendications 1 à 4, **caractérisé en ce qu'**il comprend deux logements de réception (14a, 14b) de part et d'autre d'une paroi de support (22) unique, et deux parois de blocage (24a, 24b) mobiles chacune entre une position d'usage dans laquelle ladite paroi de blocage (24a, 24b) délimite un logement (14a, 14b) correspondant à l'opposé de la paroi de support (22), et une position de moulage dans laquelle ledit logement correspondant (14a, 14b) est ouvert à l'opposé de la paroi de support (22) de manière à permettre le démoulage du module.

## Claims

1. Interior storage device for a motor vehicle, wherein the device (10) comprises at least one receptacle (14a, 14b) for at least one card (C) with a format corresponding substantially to a credit card and means (16a, 16b) for removably holding the or each card (C) inside the or each receptacle (14a, 14b), wherein the device (10) is moulded in a single piece, the device comprising a front wall (18) delimiting the or each receptacle (14a, 14b) and for each receptacle (14a, 14b) a slot (28a, 28b) for inserting the card (C) arranged in the front wall (18) and opening to the inside of said receptacle (14a, 14b), **characterised in that** for each receptacle (14a, 14b) the device comprises a supporting wall (22) for the card (C) delimiting said receptacle (14a, 14b) and a holding wall (24a, 24b) for the card (C) provided with at least one elastic element (40a, 40b) that is able to pull the card (C) towards the supporting wall (22), wherein the supporting wall (22) and the holding wall (24a, 24b) are separate from the front wall (18), the holding wall (24a, 24b) is movable in relation to the supporting wall (22) between a position of use, in which said holding wall (24a, 24b) delimits the receptacle (14a, 14b) in the opposite direction to the supporting wall (22), and a moulding position, in which the receptacle (14a, 14b) is open in the opposite direction to the supporting wall (22) in order to allow the module to be removed from the mould, and the device additionally comprises for each receptacle (14a, 14b) a rear wall (20) delimiting said receptacle (14a, 14b) in the opposite direction to the front wall (18), wherein the holding wall (24a, 24b) of said receptacle (14a, 14b) is connected to the rear wall (20) by a film hinge (34).

2. Device according to claim 1, **characterised in that** for each receptacle (14a, 14b) it comprises side walls (26) connecting the front wall (18) to the rear wall (20) and means (44) to secure the holding wall (24a, 24b) of said receptacle (14a, 14b) to the side walls (26) in the position of use of the holding wall (24a, 24b).

3. Device according to claim 1 or 2, **characterised in that** the elastic element of the or each holding wall (24a, 24b) is a strip (40a, 40b) that projects towards the interior of the corresponding receptacle (14a, 14b) when said holding wall (24a, 24b) occupies its position of use.

4. Device according to any one of claims 1 to 3, **characterised in that** the or each supporting wall (22) comprises at least two support ribs (30) for the card (C) extending towards the interior of the corresponding receptacle (14a, 14b).

5. Device according to any one of claims 1 to 4, **characterised in that** it comprises two receptacles (14a, 14b) on either side of a single supporting wall (22) and two holding walls (24a, 24b) each movable between a position of use, in which said holding wall (24a, 24b) delimits a corresponding receptacle (14a, 14b) in the opposite direction to the supporting wall (22), and a moulding position, in which said corresponding receptacle (14a, 14b) is open in the opposite direction to the supporting wall (22) in order to allow the module to be removed from the mould.

## Patentansprüche

1. Innenraumablagevorrichtung für ein Kraftfahrzeug, wobei die Vorrichtung (10) aufweist: mindestens eine Aufnahme (14a, 14b) zum Aufnehmen mindestens einer Karte (C) mit einem Format, das im Wesentlichen einer Zahlungskarte entspricht, und Mittel (16a, 16b) zum lösbaren Blockieren der oder jeder Karte (C) im Inneren der oder jeder Aufnahme (14a, 14b), wobei die Vorrichtung (10) aus einem einzigen Stück geformt ist, wobei die Vorrichtung aufweist: eine Stirnwand (18), die die oder jede Aufnahme (14a, 14b) begrenzt, und für jede Aufnahme (14a, 14b) einen Schlitz (28a, 28b) zum Einführen der Karte (C), der in der Stirnwand (18) vorgesehen ist und in das Innere der Aufnahme (14a, 14b) mündet, **dadurch gekennzeichnet, dass** die Vorrichtung für jede Aufnahme (14a, 14b) aufweist: eine Wand (22) zum Abstützen der Karte (C), die die Aufnahme (14a, 14b) begrenzt, und eine Wand (24a, 24b) zum Blockieren der Karte (C), die mit mindestens einem elastischen Mittel (40a, 40b) ausgestattet ist, das in der Lage ist, die Karte (C) in Richtung zu der Stützwand (22) zu belasten, wobei sich die Stützwand (22) und die Blockierwand (24a, 24b) von der Stirnwand (18) unterscheiden, wobei die Blockierwand (24a, 24b) bezüglich der Stützwand (22) zwischen einer Nutzungsposition, in der die Blockierwand (24a, 24b) die Aufnahme (14a, 14b) gegenüber der Stützwand (22) begrenzt, und einer Formposition, in der die Aufnahme (14a, 14b) gegenüber der Stützwand (22) offen ist, um das Herausnehmen des Moduls zu ermöglichen, bewegbar ist, wobei die Vorrichtung ferner für jede Aufnahme (14a, 14b) eine die Aufnahme (14a, 14b) begrenzende Rückwand (20) gegenüber der Stirnwand (18) aufweist, wobei die Blockierwand (24a, 24b) der Aufnahme (14a, 14b) mit der Rückwand (20) durch ein Filmgelenk (34) verbunden ist.

2. Vorrichtung gemäß Anspruch 1, **dadurch gekennzeichnet, dass** sie für jede Aufnahme (14a, 14b) aufweist: Seitenwände (26), die die Stirnwand (18) mit der Rückwand (20) verbinden, und Mittel (44) zum Befestigen der Blockierwand (24a, 24b) der Aufnahme (14a, 14b) an den Seitenwänden (26) in der Nutzungsposition der Blockierwand (24a, 24b).

3. Vorrichtung gemäß Anspruch 1 oder 2, **dadurch gekennzeichnet, dass** das elastische Mittel der oder jeder Blockierwand (24a, 24b) eine Zunge (40a, 40b) ist, die in Richtung zu dem Inneren der korrespondierenden Aufnahme (14a, 14b) hervorsteht, wenn sich die Blockierwand (24a, 24b) in ihrer Nutzungsposition befindet.

4. Vorrichtung gemäß irgendeinem der Ansprüche 1 bis 3,
**dadurch gekennzeichnet, dass** die oder jede Stützwand (22) mindestens zwei Rippen (30) zum Abstützen der Karte (C) aufweist, die in Richtung zu dem Inneren der korrespondierenden Aufnahme (14a, 14b) gerichtet sind.

5. Vorrichtung gemäß irgendeinem der Ansprüche 1 bis 4,
**dadurch gekennzeichnet, dass** sie aufweist: zwei Aufnahmen (14a, 14b) zum Aufnehmen auf beiden Seiten einer einzigen Stützwand (22) und zwei Blockierwände (24a, 24b), die jeweils zwischen einer Nutzungsposition, in der die Blockierwand (24a, 24b) eine korrespondierende Aufnahme (14a, 14b) gegenüber der Stützwand (22) begrenzt, und einer Formposition, in der die korrespondierende Aufnahme (14a, 14b) gegenüber der Stützwand (22) offen ist, um das Herausnehmen des Moduls zu ermöglichen, bewegbar sind.
